# EUROPEAN PATENT SPECIFICATION

(11) **EP 3 082 547 B1**
(45) Date of publication and mention of the grant of the patent: **28.03.2018**
(21) Application number: 16706786.7
(22) Date of filing: 04.02.2016
(51) Int. Cl.: A47L 13/16

(54) **MULTIPURPOSE CONSUMER SCRUBBING CLOTHS AND METHODS OF MAKING SAME**
MEHRZWECK-VERBRAUCHERSCHEUERTÜCHER UND VERFAHREN ZUR HERSTELLUNG DAVON
TISSUS DE NETTOYAGE GRAND PUBLIC À USAGES MULTIPLES ET LEURS PROCÉDÉS DE FABRICATION

(30) Priority: 27.02.2015 US 201562121808 P
(43) Date of publication of application: 26.10.2016
(73) Proprietor: 3M Innovative Properties Company, St. Paul, MN 55133-3427 (US)
(72) Inventor: DAVELOOSE, Paul N., Saint Paul, Minnesota 55133-3427 (US); COLE, Matthew S., Saint Paul, Minnesota 55133-3427 (US); GUNES, Ibrahim S., Saint Paul, Minnesota 55133-3427 (US); BOLUKBASI, Irem, Saint Paul, Minnesota 55133-3427 (US); GILMAN, Ann M., Saint Paul, Minnesota 55133-3427 (US); SMITH, Matthew R., Saint Paul, Minnesota 55133-3427 (US); RAITHEL, David C., Saint Paul, Minnesota 55133-3427 (US)
(74) Representative: Vossius & Partner Patentanwälte Rechtsanwälte mbB
(86) International application number: PCT/US2016/016535
(87) International publication number: WO 2016/137708

(56) References cited:
- WO-A2-2011/090721
- US-A1- 2003 217 516
- US-A1- 2006 240 223
- US-A1- 2010 263 152
- US-A1- 2013 227 805
- US-B1- 6 453 502

## Description

### Background

The present disclosure relates to scrubbing articles having a textured surface or surfaces. More particularly, the present disclosure relates to a scrubbing cloth having opposed first and second surfaces formed to have different properties relative to one another and a texture layer formed on at least one of the first and second surfaces to provide a multipurpose scrubbing cloth having enhanced surface treating capabilities. The differently formed surfaces can provide one relatively more absorbent side of the scrubbing cloth and/or one relatively higher, fluffier, loftier, less dense side of the scrubbing cloth, either temporarily or permanently. A scrubbing cloth according to the preamble of claims 1 and 12 is already known e.g. from US-A-20030217516. A variety of cleaning articles in the form of pads, wipes and cloths have been developed and made commercially available for household and industrial use. Consumers oftentimes desire to use the articles for cleaning or surface treating tasks requiring scrubbing which in turn may include various degrees of wiping, abrading and/or scouring. For example, it can be difficult, if not impossible, to remove dried food from a countertop using an inherently soft article. Conversely, however, consumers strongly prefer that the article not be overly rigid. In some cases, consumers thus desire that the article be drapable for ease of use. Furthermore, consumers often desire a scrubbing cloth that is reusable and that is not overly abrasive on relatively soft or easily scratched surfaces. In addition, consumers are often faced with cleaning tasks requiring both an abrasive-type scrubbing action as well as a non-abrasive wiping action. Finally, consumers often find cleaning articles that are preloaded with a cleaning/disinfecting/sanitizing chemical or chemicals to be useful and convenient.

Scrubbing articles have been developed to address some of the above-identified desires and concerns. For example, U.S. Patent No 7,829,478 to Johnson et al., describes a scrubbing wipe article including a nonwoven substrate and a texture layer. The texture layer is a non-crosslinked, abrasive resin-based material that is printed onto at least one surface of the nonwoven substrate. Johnson et al. teach that the texture layer composition is printed onto the substrate and then caused to coalesce to bond the composition to the substrate. Johnson et al. further describe that the resin constituent does not crosslink as part of the coalescing step and that coalescing represents a distinct advantage over other scrubbing wipe article forming techniques in which a lengthy curing period is required to achieve a sufficient hardness value. The scrubbing wipe article of Johnson et al. can be used "dry" or can be loaded with a chemical solution.

U.S. Patent App. Pub. No 2006/0286884 to Thioliere et al. describes a wiping article comprising a liquid-absorbent web material and abrasive areas comprising cured particulate binder material disposed on a surface of the web. The web material may include woven, knitted and non-woven materials. Non-woven materials may include dry-laid, wet-laid and spun-bonded materials. Suitable binder materials are disclosed that can be cured by heating, cooling or ultraviolet light.

U.S. Patent App. Pub. No. 2007/0212965 to Smith et al. describes a flexible scrubbing material that combines at least two discrete components, one being a continuous flexible substrate and one a discontinuous abrasive layer affixed to the flexible substrate. The abrasive layer is a set of plates formed from a material different than the continuous flexible substrate. The plate material is a printable material that subsequently solidifies, such as epoxy. Smith et al. teach that the abrasive plates can be formed from a solidified material such as ultraviolet or thermally curable polymeric materials with or without abrasive particles embedded inside. Smith et al. further describe a technique for printing the plates onto the substrates such as conventional screen-printing, UV etching and roller-printing. An adhesive is sprayed on the fabric prior to application of the plates. Smith et al. teaches an embodiment having two surfaces with different abrasion levels where the abrasion levels are provided on two separate substrates that may be assembled together or laminated to another substrate to form a scrub pad. Alternately, a single printed fabric can be stitched to an intermediate layer to form a composite (multiple-layer substrate) scrubbing cloth.

Other cleaning wipe constructions include or incorporate mildly abrasive particles within or at a surface of the base substrate. For example, U.S. PatentNo. 5,213,588 to Wong et al. describes an abrasive wipe consisting of a paper towel-like base substrate having printed thereon a mixture containing irregularly-shaped polymeric particles.

U.S. Patent No. 4,142,334 to Kirsch et al. describes a scouring and cleaning cloth having a coating of a solid binding agent on at least a portion of each surface in an open pattern applied by a printing process. Kirsch et al. teach a consolidated nonwoven fabric having a pattern printed on its surface such that the pattern can be pressed down into the nonwoven fabric so as to produce an even surface. However, Kirsch et al. do not describe opposed, differently formed surfaces of the fabric prior to printing the described patterns, nor a fabric having only one consolidated side or surface.

Various materials and material compositions may be used to form scrubbing articles having textured surfaces. However, a cleaning or scrubbing cloth formed of a single layer substrate having one surface treated to form a relatively more absorbent side and a texture layer formed on at least one surface is not presently available. Likewise, a scrubbing cloth formed of a single layer substrate having a fluffy, lofty, less dense or relatively higher surface (i.e., fibers of the substrate project a distance from a mid-plane of the substrate) and an opposed relatively flat, less lofty, more dense, lower surface with a texture layer provided on at least one of the surfaces, is not presently available. Such multipurpose cloths would advantageously allow for both non-abrasive wiping and/or liquid absorption as well as scouring/abrading actions to be accomplished with a single scrubbing article simply by reversing the side of the cloth being applied to the surface to be treated.

As described above, improvements in the properties and manufacture of a scrubbing cloth may be beneficial and desirable. A need therefore exists for a multipurpose scrubbing cloth that includes the benefits and advantages of a single-layer substrate having different, opposed surfaces, for example, where one surface/side is more absorbent, fluffier, loftier, less dense and/or has higher projecting fibers than an opposed less absorbent, flatter, less lofty, denser and/or smoother surface (at least temporarily) and a texture layer on at least one of the surfaces. A need also exists for such a scrubbing cloth that is likewise reusable.

### Summary

Aspects of the present disclosure relate to a scrubbing cloth. Scrubbing cloths of the present disclosure may take a variety of forms that include opposed, differing surfaces (e.g., differing relative loft, height, fluff, absorptive properties etc.) and a texture layer formed on at least one of the surfaces. In some embodiments, the scrubbing cloth includes a substrate having a first surface and a second surface opposite the first surface where the first surface has a first degree of loftiness and the second surface has a second degree of loftiness and the first degree of loftiness is greater than the second degree of loftiness. In other embodiments, the scrubbing cloth includes a substrate having a substrate having first and second surface opposed surfaces where at least one of the first and second surfaces is more absorptive than the other. At least one of the first and second surfaces of the various disclosed substrates include a texture layer formed thereon. Formation of the texture layer can be accomplished via various techniques and the texture layer composition may be formed of various materials. In some embodiments, the first surface of the cloth can have a first height greater than a second height of the second surface and the second surface can have a density greater than a density of the first surface.

According to some embodiments, the scrubbing cloth has a first, lofty or fluffy surface and an opposed, second, less lofty or flat surface while according to alternative embodiments, the relative loft, density and height of opposed surfaces of a scrubbing cloth are equal and the substrate forming the scrubbing cloth is treated on one side to form a side or surface having different absorptive properties relative to the opposed side or surface. Scrubbing cloths described may form multipurpose and/or reusable scrubbing cloths. Scrubbing cloths according to the invention comprise a single-layer substrate made of woven material. In some embodiments, a texture layer may be formed on the relatively flatter surface while the flatter surface remains permanently flattened. Alternatively, the flatter surface may be formed to only temporarily be flatter such that the texture layer may be formed thereon more readily while the surface is in a flattened configuration. As a further alternative, a texture layer may be formed on the relatively loftier (fluffier) surface while the flatter surface remains permanently in a relatively flat, less lofty configuration. As yet a further alternative, a texture layer may be formed on both a loftier surface as well as on an opposed relative flat surface and still result in a cleaning article that provides multipurpose cleaning actions (given the relative differences in the surface portions that are not textured). In yet further embodiments, a texture layer may be formed on a surface of a substrate having one side that is more absorbent than an opposed side.

Methods according to the present disclosure include formation of a scrubbing cloth having a textured layer formed thereon including treating one side of a substrate to form a treated surface having surface characteristics differing from that of an opposed side of the substrate. The opposed side of the substrate may be untreated or may be left undisturbed by the treatment of the treated side. The opposed side may form a first, lofty surface and the treated side may form a second, flattened or less lofty surface. In some embodiments, the treated side forms a more absorptive surface and the opposed side forms a less absorptive surface. Treatment can be achieved via various processing methods including calendaring, heat compression, flame treating, melting, cutting, removing fiber height, plasma treatment, spraying, flame treatment or electrical discharge. A texture layer is formed on at least one surface of the substrate to form a scrubbing cloth.

### Brief Description of the Drawings

FIG. 1 is a perspective view of a scrubbing cloth in accordance with an embodiment of the present disclosure;
FIG. 2 is an enlarged plan view of the textured surface of the scrubbing cloth of FIG. 1;
FIG. 3 is an enlarged, cross-sectional view of a portion of the cloth of FIG. 1 taken along the lines 3-3, shown in FIG. 1;
FIG. 4 is an enlarged, cross-sectional view of a scrubbing cloth in accordance with an embodiment of the present disclosure;
FIG. 5A is a plan view of a first surface of a scrubbing cloth illustrating fibers on a first side of a substrate;
FIG. 5B is a plan view of an opposed surface of the scrubbing cloth of FIG. 5A, illustrating fibers on a second side of the substrate in accordance with an embodiment of the present disclosure;
FIG. 6A is a photograph of a portion of an exemplary substrate folded at a corner to show first and second surfaces of the substrate, in accordance with an embodiment of the present disclosure;
FIG. 6B is a photograph of one side of a scrubbing cloth formed from the substrate of FIG. 6A, in accordance with an embodiment of the present disclosure;
FIG. 7A is a photograph of a portion of a textured surface of an exemplary scrubbing cloth, in accordance with the present disclosure;
FIG. 7B is a photograph of a portion of the scrubbing cloth of FIG. 7A folded at a corner of the cloth to show both the textured surface and an opposed surface of the scrubbing cloth of FIG. 7A;
FIG. 8 is a view of the cloth portion of FIG. 3 being applied to a surface;
FIGS. 9A-9B are top views of alternative embodiments of a scrubbing cloth in accordance with the present disclosure;
FIG. 10 is a simplified illustration of a substrate during a method of manufacture in accordance with an embodiment of the present disclosure;
FIG. 11 is a simplified illustration of a method of manufacture of a scrubbing cloth in accordance with an embodiment of the present disclosure; and
FIG. 12 is a cross-sectional, enlarged side view of a scrubbing cloth in accordance with an embodiment of the present disclosure.
FIG. 13 is a side cross-sectional view of a portion of a scrubbing cloth in accordance with an embodiment of the present disclosure.

### Detailed Description

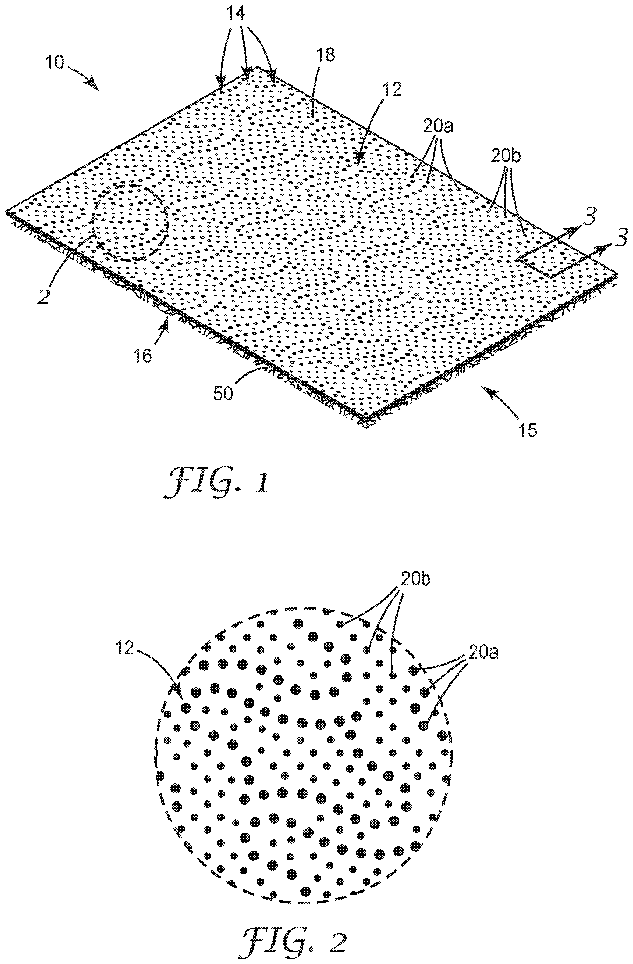

FIG. 1 illustrates an embodiment of a scrubbing cloth 10 in accordance with the present disclosure. Scrubbing cloth 10 may be described as a consumer cleaning or scrubbing cloth 10. As used throughout this Specification, the term "consumer" is in reference to any household, cosmetic, industrial, hospital or food industry applications and the like of the cloth 10. Certain embodiments can be used as floor pads or hand pads, for example. Further as used throughout this Specification, the term "scrubbing" is used to describe surface treating and may include cleaning, abrading and/or scouring, including various levels or degrees of abrading and/or scouring action (e.g., heavy duty, non-scratch, etc.). The cloth 10 comprises a substrate 12 and a texture layer 14 (referenced generally in FIG. 1). The substrate 12 and the texture layer 14 can comprise a variety of different materials as described further below. Regardless, the scrubbing cloth is characterized as including opposed sides having differing surfaces or sides (e.g., 16, 18) and a texture layer 14 formed on and perhaps at least partially penetrates at least one surface of the substrate 12 to provide a multipurpose cleaning article.

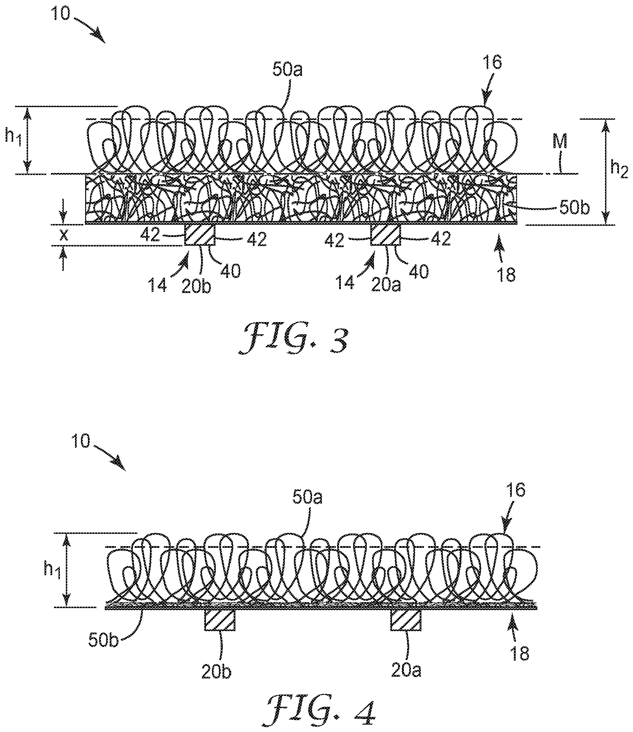

With reference to FIGS. 1 and 3, the substrate 12 defines first and second opposing surfaces (also described as sides) 16, 18 which form first and second opposed surfaces of the scrubbing cloth 10. In other words, since the scrubbing cloth 10 is formed from a single (non-laminated) substrate/fabric 12 (as used herein, the terms substrate and fabric are interchangeable), the surfaces 16, 18 of the fabric 12 likewise form the surfaces 16, 18 of the scrubbing cloth 10. A texture layer 14 is formed on one or both of the surfaces 16, 18 of the substrate 12 to form the scrubbing cloth 10. For example, a texture layer 14 is formed on surface 18 in the embodiment of FIG. 1. In some embodiments, the scrubbing cloth 10 further includes a chemical (e.g., a solid or a solution, not shown) loaded into, or absorbed by, the substrate 12. Alternatively, the chemical may be formed on the cloth surface (e.g., via drying, spraying etc.) or may be provided as part of the texture layer composition 14. Applicable chemicals are likewise described in greater detail below. The texture layer 14 may be configured to accommodate a wide variety of chemicals including those that are neutral, cationic, or anionic. Further, the scrubbing cloth 10 is equally useful without a chemical formulation.

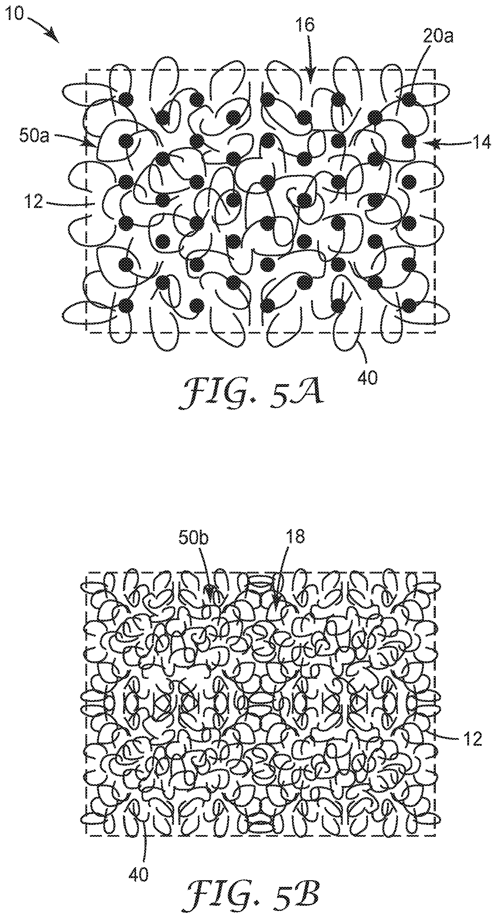

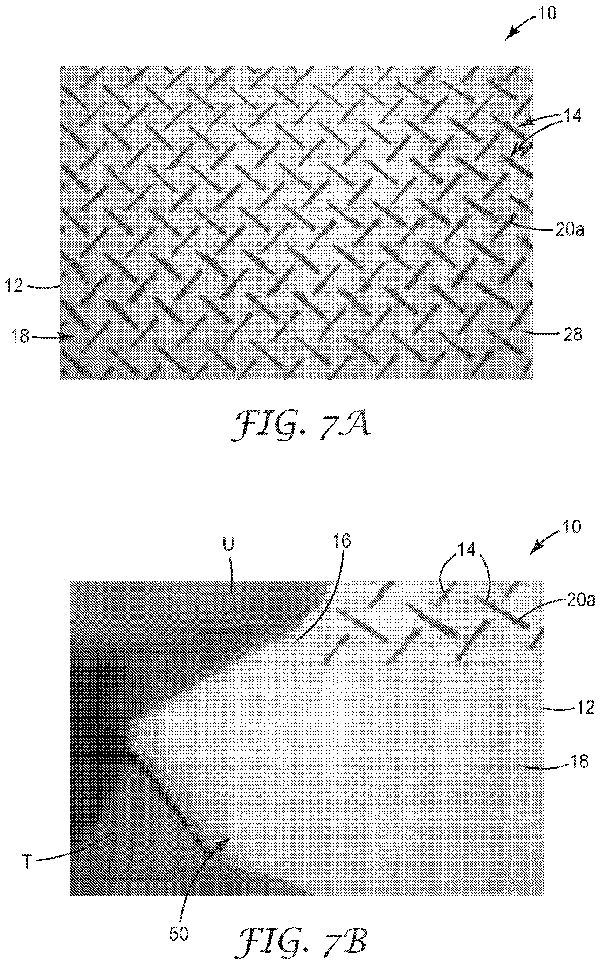

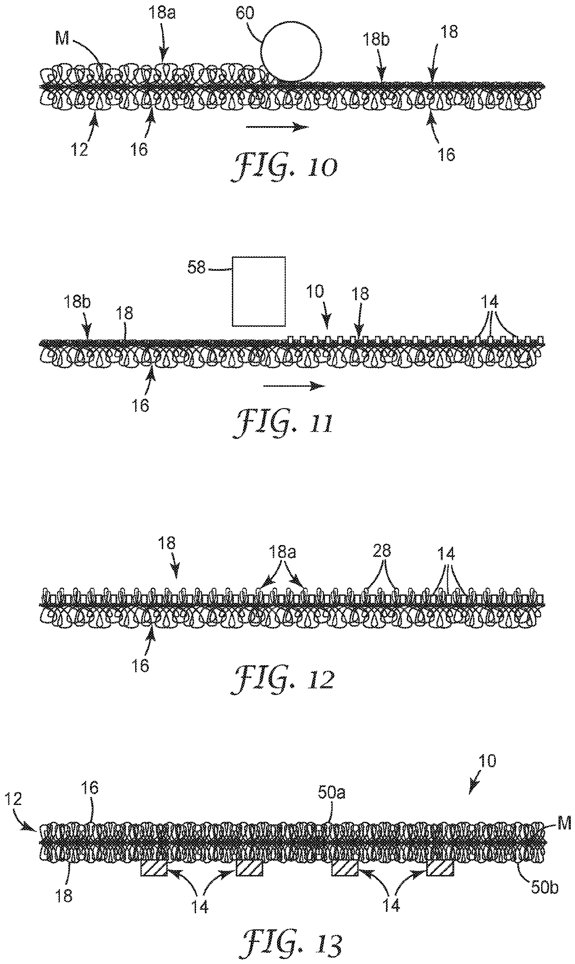

Compositions of the substrate 12 and the texture layer 14, as well as processing thereof, are provided below. In general terms, the scrubbing cloth 10 may be described as a multipurpose scrubbing cloth formed to have a lofty, fluffy surface on one side (e.g., 16) and a relatively less lofty, flat or smooth surface on an opposed side/surface (e.g., 18). The loftier side or surface 16 of scrubbing cloth 10 has an average fiber height that is higher than an average fiber height of the less lofty or flat side/surface 18 of the scrubbing cloth 10 (where height is in reference to a mid-plane M, FIG. 5, discussed below). In addition, one side (e.g., 16) of substrate 12, whether or not that side has differing loft, fluff, density, etc., may be treated to provide a relatively more or less absorbent side. To form the substrate 12 with opposed sides 16, 18 having the differing characteristics described (i.e., flat vs. fluffy), substrate 12 may be manufactured in a variety of ways. One side (e.g., 18) of the substrate 10 may be configured to be treated (e.g., consolidated) only temporarily so that a texture layer 14 can more readily or easily be formed thereon. In this case, after the texture layer 14 is deposited or formed on the treated surface 18, the fibers of the treated surface portions not having texture composition thereon (e.g., 28, FIGS. 7A, 12) may be allowed to return to an untreated (e.g., fluffy, lofty) state such as after use or after undergoing an initial wash cycle. Alternatively, surface 18 may be configured to be treated (e.g., flattened, less lofty, or have less height relative to an opposed surface 16) permanently in which case the fibers of surface 18 would remain in the flattened, less lofty, less high state throughout the life (usage) of the cloth 10. As a further alternative, the substrate 12, when initially formed into a fabric, may be manufactured in such a way so as to provide the relative fluffy and flat opposed surfaces 16, 18 at the time of formation of the fabric itself. In this case, the flat surface (e.g., 18) would likewise remain in a relatively flattened or smooth (less lofty) state throughout the life (usage) of the cloth.

The term "flat" when used to describe a surface of cloth 10 (or of substrate 12) is intended to define surface characteristics including: generally uniform, uniform, completely flat, substantially flat, smooth, consolidated, more dense, less lofty (i.e., having a lesser degree of loftiness), less fluffy, shorter, lower height and/or having fibers of the surface that lie generally in the same plane, where the terms "more" and "less" are relative to an opposed side/surface. In addition, the term "fluff or "fluffy" as used herein to describe an opposed surface of cloth 10 (or substrate 12) is intended to define surface characteristics including: open, lofty (i.e., having a greater degree of loftiness, less dense, non-consolidated, non-compacted, higher, or greater height, where the terms "more" and "less" are relative to an opposed side/surface . When using the term "flat" or "fluff" alone or in conjunction with other terms such as "smooth", "less lofty", "open, lofty" etc., it is to be understood that any one or all of the characteristics may be used to define the surface characteristics, whether or not the terms "and"/"or" are used to denote the various features.

The terms "absorbent", "absorptive" and "absorbing" as used to describe scrubbing cloths according to embodiments of the present disclosure are defined as having the ability to absorb a material (e.g., a liquid) reversibly, at least to some degree. Stated otherwise, an absorbent material can be defined as one that a liquid can penetrate into and, rather than trap and irreversibly hold the liquid, the material may release the liquid either by evaporation (drying) or physical force (e.g., hand pressure/wringing). Thus, a more absorbent side or surface of a substrate may more readily or to a greater degree absorb a liquid than an opposed side of the substrate and the liquid absorbed is able to at least partially be removed from the substrate, for example, by hand (e.g., wringing) or by drying.

Further, in general terms, the scrubbing cloth 10 may be described as providing a "scrubbiness" or abrasive attribute that is given by the texture layer 14 formed on at least one side or surface of the substrate 12. Conversely, the scrubbing cloth 10 provides a wiping or non-abrasive attribute on a side opposing the abrasive surface/side. The term "scrubbiness" is in reference to an ability to abrade or remove a relatively small, undesirable item otherwise affixed to a surface as the cloth is moved back and forth over the item, as described more fully below. A substrate can be given a scrubbiness characteristic not only by forming a hardened scrubbing material (i.e., texture layer) on the substrate's surface that may be at least as hard as or harder than the substrate itself, but also via the extent to which the so-formed material extends from or beyond the substrate surfaces or fibers, in conjunction with side-to-side spacing between individual sections of the scrubbing material.

In the embodiment of FIG. 1, the scrubbing cloth 10 is characterized as having a lofty, fluffy surface (e.g., 16) on one side and a relatively less lofty, flat or smooth surface (e.g., 18) on an opposed side where the loftier side or surface 16 of scrubbing cloth 10 includes fibers 50 having an average fiber height that is higher than an average fiber height of the less lofty surface 18. The terms "loft" or "loftiness" as used in this specification are in reference to the spacing or "openness" of fibers 50 otherwise forming the surface/area/volume in question. For example, a first surface/area/volume with fewer fibers per unit area or volume as compared to a second surface/area/volume comprised of the same denier fibers is considered to have a higher degree of loftiness. Alternatively, loft or loftiness can be defined in terms of bulk density. "Bulk density" is the weight of a given fabric per unit volume. The fabric thickness can be measured in many ways; one accurate method employs an optical scanning technique.

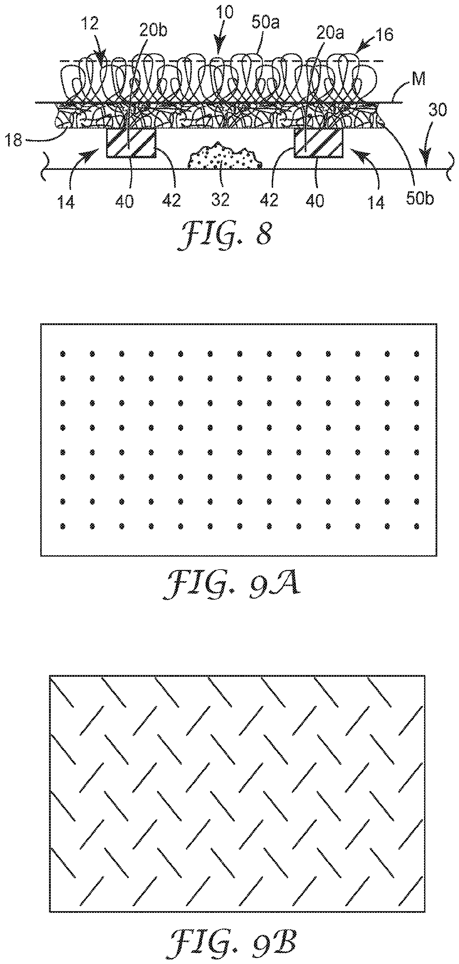

FIG. 3 shows a cross-sectional view of a portion of the cloth 10 of FIG. 1 (where the orientation of FIG. 3 is such that the cloth 10 is facing the opposite direction relative to the orientation of FIG. 1, i.e., the textured surface 18 is facing up in the orientation of FIG. 1 and down in Fig. 3). The opposed surfaces 16, 18 of the scrubbing cloth 10 include fibers 50a, 50b, respectively. It is to be understood that the fibers 50a, 50b are formed of the same substrate material or base fiber 50 and the different references are intended to show the differences in the characteristics of the fiber 50 at the various surfaces 16, 18. As a point of reference, the term "height" as used in this specification is in reference to extension of the fibers 50a, 50b and thereby the surfaces 16, 18 beyond (or "above" for fibers 50a relative to the orientations of FIGS. 3 and 8) relative to a mid-plane M that is otherwise generally parallel to a planar orientation of the substrate 12 (e.g., parallel to the first and second surfaces 16, 18 when the first and second surfaces 16, 18 are otherwise lying in a generally flat plane such as when the cloth 10 is placed on a secondary, generally flat surface or object (e.g., table T, FIG. 7B)), it being understood that even when placed on an otherwise flat secondary object, the first surface 16 is not "flat" as that term is used herein to describe the second surface 18). Alternatively, the height of the first surface 16 can be measured from/relative to the second surface 18, such as depicted in FIG. 4. Measurement of fibers 50a relative to the second surface 18 (rather than relative to a mid-plane M) may be particularly useful in the case where a fabric is initially formed to have a flat second surface 18, since fibers 50 are knitted or woven to project in a direction outwardly opposite to the second surface 18 (i.e., upwardly with respect to the orientation of FIG. 4), described in further detail below.

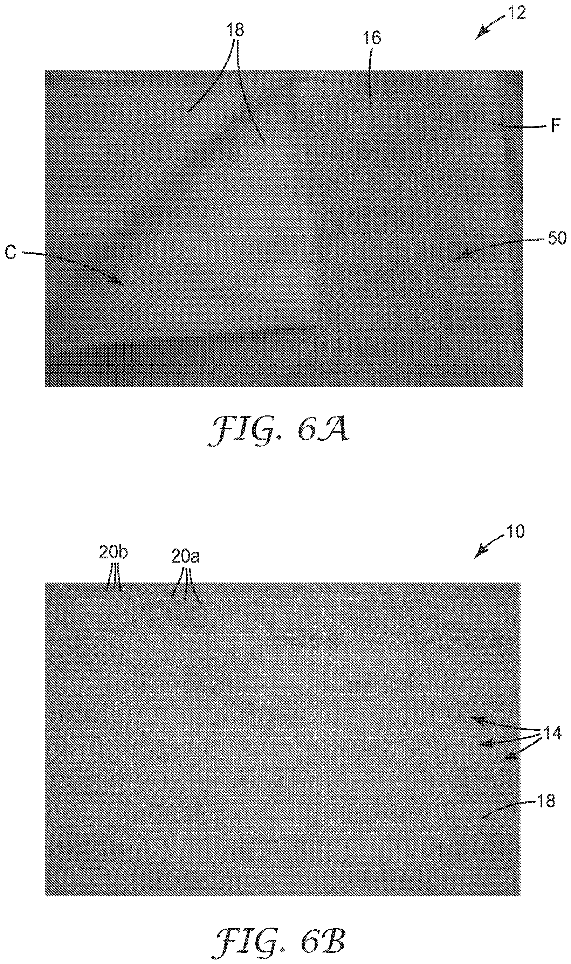

To better illustrate the loftiness characteristics associated with the first and second surfaces 16, 18, reference is made to FIGS. 5A and 5B. FIG. 5A is a plan view of first surface 16 of scrubbing cloth 10 illustrating fibers 50a (referenced generally) on a first side of a scrubbing cloth 10 as well as a portion of a texture layer 14 formed on the first surface 16. FIG. 5B is a plan view of an opposed surface of the scrubbing cloth of FIG. 5A, illustrating fibers 50b (referenced generally) on a second side of the cloth 10. Notably, the substrate 12 has a uniform material construction (i.e., the substrate 12 is comprised of a single, uniform material/composition and is a single, non-laminated layer), and is processed to generate the differing first and second surfaces 16, 18. In particular, the substrate 12 is formed (at least temporarily) such that the first surface 16 has a first degree of loftiness and a first height hi while the second surface 18 has a second degree of loftiness and a second height h₂ (FIG. 3). It is to be understood that since the scrubbing cloth 10 is formed of only a single layer substrate 12, the loftiness and height of each of the first and second surfaces of the substrate form the loftiness and height of each of the surfaces (16, 18) of the scrubbing article 10. The surfaces 16, 18 may be visually distinct from one another, meaning that they are readily discernable to the naked eye such as depicted in FIG. 6A, described below.

With reference to the above conventions, the first degree of loftiness (i.e., the degree of loftiness associated with the first surface 16) is greater than the second degree of loftiness (i.e., the degree of loftiness associated with the second surface 18). Similarly, the first height hi (i.e., the height associated with the first surface 16) is greater than the second height h₂ (i.e., the height associated with the second surface 18). With specific reference to FIG. 5A, the degree of loftiness is better illustrated by the "openness" of the fibers 50a. The fibers 50a are more distinctly spaced apart as compared to the fibers 50b. Thus, the first surface 16 can be described as having fewer fibers 50 per unit volume as compared to the number of fibers 50 per unit volume of the second surface 18. As described below, in one embodiment, this difference in degree of loftiness or fibers per unit volume can be achieved by treating the substrate 12 at the second surface 18 or may be accomplished during the fabric forming process by forming (e.g., knitting, weaving) the substrate 12 to have a more dense (less lofty, flatter) structure at the second surface 18.

Regardless, in one embodiment, the bulk density of the first surface 16 is at least 100% less than the bulk density of the second surface 18, more preferably at least 200% less than, and even more preferably at least 300% less than. It will be understood that by having a lesser bulk density, the first degree of loftiness (of the first surface 16) is thus greater than the second degree of loftiness (of the second surface 18) as bulk density has an inverse relationship with loftiness.

As further evidenced by FIG. 5A, the fibers 50 (encompassing fibers 50a and 50b) comprising the substrate 12 are, in one embodiment, randomly or semi-randomly dispersed within the substrate 12. Thus, the scrubbing cloth 10 at the surface 16 may not have clear "edges". Instead, as depicted in FIG. 5A, various ones of the fibers 50a "extend" or project beyond hypothetical edges of the cloth 10 (shown with dashed lines in FIG. 5A). When fibers 50 are in a consolidated state or are formed to provide a flat, lower surface such as depicted in FIG. 5B, however, the fibers 50b may provide a more clear edge. Regardless, the "height" of a particular surface can be more accurately described as the nominal height defined by a majority of the fibers 50a, 50b positioned/extending at the surface 16, 18. For example, the fibers 50a combine to define a height of the first surface 16 and the fibers 50b combine to define a height of the second surface 18.

Regardless, and in one embodiment, the height of the first surface 16 is at least 120% of the height of the second surface 18, more preferably at least 150%, and even more preferably at least 200%. Alternatively stated, relative to the mid-plane the first surface 16 extends higher or farther beyond the mid-plane M than does the second surface 18.

Alternatively, the degree of loftiness and height of opposed sides 16, 18 of substrate 10 may be substantially equal. However, one side (e.g., 16) may be treated to form a side having a greater (or lesser) degree of absorptiveness than an opposed side (e.g., 18). FIG. 13 illustrates an embodiment of a scrubbing cloth 10 having opposed sides or surfaces 16, 18 and a texture layer 14 formed on surface 18. The relative degrees of loftiness and height of surfaces 16, 18 are substantially the same or equal. However, side 16 is treated such as by a chemical, physical or other method to provide fibers 50a, and thus side 16, with a relatively greater absorptive quality (i.e., more absorptive) than that of fibers 50b and therefore that of side 18. Some chemical and physical treatments, for example, include plasma treatment, flame treatment, electrical discharge and/or spraying or otherwise depositing a chemical composition onto one side of the substrate 12 used to form cloth 10. What is important is that the treatment creates fibers (e.g., 50a) having a relatively more (or less) absorptive quality than the fibers (e.g., 50b) of an opposed side of the substrate 12. Further, even where a substrate 12 is formed as described above to have one relatively more lofty, less dense, higher fiber side (e.g., 16), one side of the substrate may be treated as described above, chemically or physically to provide additional levels of relative absorption of the surfaces 16, 18 of a substrate 12.

### Substrate Composition (nonwoven materials being not part of the present invention)

The substrate 12 may be formed from a variety of materials and in a variety of forms. Any substrate material or combination of materials suitable for use as a consumer scrubbing cloth can be used including, without limitation, various woven, knitted, and non-woven materials. The materials and forms of the substrate 12 can be selected to provide varying ranges of desired properties, such as extensibility, elasticity, durability, flexibility, etc., that are particularly suited to a given scrubbing task and/or are particularly suited to depositing or forming of a texture composition thereon. The durability of materials suitable for use in scrubbing cloths is often categorized as "disposable" (meaning that an cloth formed from the material is intended to be discarded immediately after use), "semi-disposable" (meaning that an article formed from the material can be washed and re-used a limited number of times), or "reusable" (meaning that an article formed from the material is intended to be washed and re-used). Materials useful for substrate 12 may be selected to have durability properties in a wide range (i.e., disposable, semi-disposable or reusable), but may be particularly chosen to have reusable properties.

Also as indicated above, materials may be selected based upon their flexibility. In applications where a relatively more flexible, supple scrubbing article is preferred (e.g., drapable), providing a more flexible substrate 12 allows the user to readily fold, squeeze, or otherwise manipulate the scrubbing article 10 in a manner most appropriate for the particular scrubbing task. The desired suppleness of the substrate 12 is best described with reference to a dry basis weight thereof. As one non-limiting example, in an embodiment, a nonwoven substrate 12 of the present disclosure has a dry basis weight of less than about 300 g/m², but preferably greater than about 30 g/m². In other embodiments, the nonwoven substrate 12 has a dry basis weight of less than about 200 g/m². Alternatively, the suppleness of the nonwoven substrate 12 can be expressed in terms of drapability. "Drapability" is defined as the inherent ability to conform to an irregular or non-flat surface. Drapability or "drape" is measured using INDA standard for "Handle-O-Meter Stiffness of Nonwoven Fabrics" IST 90.3 (95). With this in mind, the nonwoven substrate 12 preferably has a drapability value of less than about 250.

Some exemplary substrates 12 used to form the fabric of the present disclosure will now be described, however, a wide variety of materials may be used for substrate 12, as noted above. Exemplary fabrics useful with the present disclosure include a knitted fabric prepared from 82% poly(ethylene terephthalate) and 18% polyamide 6 fibers having a thickness in a range of 0.45-0.75 mm and a unit weight of 160 grams per square meter.

Nonwovens likewise may be used and can be formed from a variety of materials and in a variety of fashions selected to provide desired properties, such as extensibility, elasticity, etc., in addition to the requisite suppleness. In most general terms, a nonwoven is comprised of individual fibers (e.g., 50, FIG. 1) entangled with one another (and optionally bonded) in a desired fashion. The fibers are preferably synthetic or manufactured, but may include natural materials such as wood pulp fiber. As used herein, the term "fiber" includes fibers of indefinite length (e.g., filaments) and fibers of discrete length (e.g., staple fibers). The fibers used in connection with a nonwoven substrate 12 may be multicomponent fibers. The term "multicomponent fiber" refers to a fiber having at least two distinct longitudinally coextensive structured polymer domains in the fiber cross-section, as opposed to blends where the domains tend to be dispersed, random, or unstructured. The distinct domains may thus be formed of polymers from different polymer classes (e.g., nylon and polypropylene) or be formed of polymers of the same polymer class (e.g., nylon) but which differ in their properties or characteristics. The term "multicomponent fiber" is thus intended to include, but is not limited to, concentric and eccentric sheath-fiber structures, symmetric and asymmetric side-by-side fiber structures, island-in-sea fiber structures, pie wedge fiber structures, and hollow fibers of these configurations. In addition to the availability of a wide variety of different types of fibers useful for a substrate 12, the technique for bonding the fibers to one another is also extensive. In general terms, suitable processes for making the nonwoven substrate 12 that may be used in connection with the present disclosure include, but are not limited to, spunbond, blown microfiber (BMF), thermal bonded, wet laid, air laid, resin bonded, spunlaced, ultrasonically bonded, etc.

In some embodiments, the substrate 12 is spunlaced utilizing a fiber sized in accordance with known spunlace processing techniques. With this manufacturing technique, one construction of a nonwoven substrate 12 is a blend of 50/50 wt. % 1.5 denier polyester and 1.5 denier rayon at 50 - 60 g/m². The substrate 12 is first carded and then entangled via high-pressure water jets as is known in the art. The spunlace technique eliminates the need for a thermal resin bonding component, so that the resulting nonwoven substrate is amenable to being loaded with virtually any type of chemical solution (i.e., anionic, cationic, or neutral). An exemplary nonwoven includes a thermally point-bonded spunbond poly(ethylene terephthalate) nonwoven.

Other knits, wovens and nonwovens are likewise contemplated and these examples are not meant to be limiting. Regardless of the exact construction, however, the substrate 12 is highly flexible and drapable and conducive to use and handling by a user otherwise using the article 10 for scrubbing purposes and is selected having regard to the intended use of the scrubbing cloth 10. Further embodiments, can include one or more additional layers on the surface 16, 18 of the substrate 12 such as an adhesion promoter layer or a tie layer, for example.

### Substrate Formation (nonwoven materials being not part of the present invention)

As described above, substrate 12 may be formed to have differing degrees of loft, height and relative "flatness"/"fluff" on opposed sides 16, 18. In addition, as described above, forming the substrate 12 to include these features may be accomplished in a variety of ways. In general, the substrate 12 can be formed in the first instance, or upon manufacturing of the fabric 12, such that the opposed sides 16, 18 include the varying (different) features immediately after manufacture of the fabric 12, without undergoing any further processing. Alternatively, and as described in further detail below, a substrate 12 may be first formed into a fabric and subsequently one side (e.g., 18, FIG. 10) of the fabric can be treated to provide a less lofty, flatter or lower in height surface while the opposed side (e.g., 16) is not subjected to the same treatment thereby resulting in a loftier, more open, higher opposing, untreated surface.

In embodiments where the substrate 12 is formed initially to provide the relative flat/fluffy surfaces 16, 18, various methods may be used to achieve the fabric formation. For example, the fabric/substrate 12 may be knitted or woven in a manner whereby the knit stitch or weave is configured such that one side of the fabric forms a lower plane of the fabric having a relatively flat surface 18 while the opposed side 16 of the fabric 12 includes fibers (e.g., 50) projecting in a direction outwardly opposed to the flat surface 18 to form a relatively fluffy, loftier surface 16.

FIGS. 6A-6B are photographs of an example substrate 12 and scrubbing cloth 10 formed according to these methods. As a point of reference, in the exemplary embodiment of FIG. 6A, substrate 12 forms a fabric 12 that, in the illustrated view, is folded upon itself (e.g., in half) at a fold F and has corner C of the folded fabric folded back upon itself to expose a surface 18. The fabric 12 of FIG. 6A was initially formed according to the EXAMPLES, SAMPLE 1, set forth below. One side 18 of the fabric forms a lower plane of the fabric having a relatively flat surface while the opposed side 16 of the fabric 12 includes fibers (e.g., 50) projecting in a direction outwardly opposed to d surface 18 to form a relatively fluffy, loftier surface 16. Fabrics/substrates 12 formed according to these embodiments (where the fabric 12 is initially formed to provide the relative differing, opposed surfaces 16, 18), may advantageously allow for ease of deposition or formation of a texture layer 14 on the flat surface 18 in that providing a surface that is relatively flat or smooth can allow for a well-defined, sharp texture pattern to be deposited thereon. Regardless, and as described below, a texture layer may alternatively be formed on the lofty, fluffy surface (e.g., 16) of a substrate 12 formed in the manner described above. FIG. 6B is a photograph of the flat, less lofty surface 18 of substrate 12 of FIG. 6A after a texture layer 14 has been formed thereon, thereby forming the surface 18 of a scrubbing cloth 10.

In other embodiments, one side of substrate 12 may be treated to temporarily or permanently create a less lofty, flatmore dense surface, or at least portions thereof 16. Treatment of a surface can include various processing methods including but not limited to: calendaring, heat compression, flame treating, ultrasound treating, melting, cutting, and removing fiber height. These processing methods in turn can take on various forms and may be accomplished in a variety of ways. Some of these methods can create only a permanent or only a temporarily flatter/denser/consolidated surface (or at least portions of the surface) whereas some of these methods can create either a permanent or a temporarily flatter/denser/consolidated surface or portions of the surface), depending upon processing parameters. As described above, a temporarily flattened (compressed, consolidated etc.) surface is one having at least portions that are allowed to revert to a first, original (uncompressed, lofty etc.) state. Conversely, a permanently flattened surface is one that remains in the flattened state throughout the life of the cloth 10 despite use and/or washing etc. of the cloth 10.

FIG. 10 illustrates a substrate 12 with opposed sides or surfaces 16, 18a where surface 18a depicts surface 18 in an untreated, first or original state. Surfaces 16 and 18a are of uniform loft, height and relative "fluffiness." One side (surface 18, referenced generally) of the fabric 12 is subjected to treatment in any manner discussed above via a fabric treatment device 60. Device 60 can include for example a heated nip roller, cutter, press, heated press etc. Regardless, subjecting surface 18 to treatment creates a second or treated state 18b (referenced generally) that forms the flattened, consolidated or otherwise treated second surface 18b. Subsequent to formation of the treated surface 18b, a texture layer (not pictured in FIG. 10) may be formed on either surface 16, 18b as described below, to form a scrubbing cloth 10 (FIG. 1).

In some embodiments, one side 18 of substrate 12 is only temporarily flattened (consolidated, compressed, etc.) and a texture layer 14 is formed on the temporarily flattened surface. The temporarily flattened surface, having texture layer 14, includes surface portions that do not have a texture composition deposited thereon and these portions are allowed to return to an unflattened state. As illustrated in FIGS. 11 and 12 and with reference to FIG. 10, substrate 12 includes a temporarily consolidated surface 18b. Surface 18b has been previously flattened such as via a treatment device 60 (FIG. 10). After the temporarily flattened surface 18b is formed on substrate 12, a texture layer 14 is deposited on surface 18b via a texture former 58. FIG. 12 illustrates the textured scrubbing cloth 10 of FIG. 11 after the cloth 10 has been used, washed, heated, treated with brush, knife, or a bar etc. or otherwise providing for allowance of portions 28 to revert to an untreated state. As depicted in FIG. 12, portions 28 of the surface 18 not otherwise having texture composition 14 deposited or formed thereon are allowed to revert or rebound close to or fully to the unconsolidated, first, original state 18a (FIG. 10 Given this construction, advantageously, the texture layer 14 may be formed on a more uniform and less lofty treated surface 18b of a substrate 12 and subsequent to use or washing of the formed scrubbing cloth 10, portions 28 of the surface 18b not having a textured composition 14 thereon are allowed to rebound, at least partially, to a lofty, uncompressed, or fluffy state 18a. The degree of loftiness and the height of the rebounded or reverted surface portions 28 of surface 18 may be equal to the degree of loftiness and height of surface 16.

FIGS. 7A-7B are photographs of an example scrubbing cloth 10 formed according to the present disclosure and as provided in the EXAMPLES, SAMPLE 2, set forth below. As described below, FIG. 7A is a photograph of one side of a substrate 12 formed from a nonwoven microfiber cloth 12.

### Texture Layer

The texture layer 14 defines a plurality of discrete portions (e.g., the various dot-like portions shown in FIGS. 1-2 and referenced generally at 20a, 20b). Discrete portions 20a, 20b may form a randomly textured surface or may form a pattern on a substrate or cloth surface 16, 18 (textured layer 14 being shown on surface 18 in FIGS. 1-2). Further, discrete portions (e.g., 20a, 20b) may comprise varying relative sizes or may be substantially uniform in size. For instance, and as illustrated more clearly in FIG. 2A, dots 20a are relatively larger than dots 20b. Further, discrete portions (e.g., 20a, 20b) may extend or project outwardly from the surface 16, 18 at substantially uniform distances or, alternatively, may extend or project outwardly from the surface 16, 18 at varying distances (i.e. the discrete portions 20a, 20b can have similar or varying heights with respect to the surface 16, 18). In some embodiments, discrete portions (e.g., 20a, 20b) may extend to any distance in a range of about 10 to about 500 microns outwardly from the surface 16, 18. In other embodiments, discrete portions (e.g., 20a, 20b) may extend to any distance in a range of about 10 to about 20 microns outwardly from the surface 16, 18. In still further embodiments, discrete portions (e.g., 20a, 20b) may extend to a distance of 500 microns or less outwardly from the surface 16, 18. Regardless, a variety of texturings and/or patterns can be provided on the substrate 12. Alternative exemplary embodiments of patterns useful with the present disclosure are shown in FIGS. 5A, 7A-7B and 9A-9B.

Regardless of the pattern design and/or extension distance of portions (e.g., 20a, 20b) from the surface 18, during a scrubbing application, a user may position the scrubbing cloth 10 such that one or the other of surfaces 16, 18 is facing the surface to be scrubbed. FIG. 8 illustrates a scrubbing cloth 10 in a position such that the surface (e.g., 18) having the texture layer 14 formed thereon is facing the surface 30 to be scrubbed. In FIG. 8, the scrubbing cloth 10 is positioned to clean or otherwise treat surface 30. As should be understood, the surface 30 to be cleaned is application specific, and can be relatively hard (e.g., a table top or cooking pan) or relatively soft (e.g., human skin, polymeric baking vessels, etc.). Regardless, in the exemplary embodiment of FIG. 8, the surface 30 to be scrubbed may have a mass 32 that is undesirably affixed thereto. Again, the mass 32 will be unique to the particular scrubbing application, but includes matters such as dirt, dried food, dried blood, etc. The scrubbing cloth 10 and in particular the surface having a textured layer 14 thereon facilitates scrubbing removal of the mass 32 as a user repeatedly forces the texture layer 14 (or a portion or section thereof) back and forth across the mass 32. Each section (for example, the portions 20a, 20b) of the texture layer 14 must be sufficiently hard to either abrade or entirely remove the mass 32 during the scrubbing motion. In addition, the texture layer 14 must extend an appreciable distance from the substrate surface 18 to ensure intimate surface interaction with the mass 32 along not only an outer most surface 40, but along sides 42 as well. Portions 20a, 20b, while depicted as having uniform, sharp corners or edges (at the intersection of surface 40 and sides 42), may likewise or instead have rounded edges or corners or may be non-uniform in cross-section. What is important is that the extension of the texture layer is such that the desired scrubbiness is achieved. Notably, many cleaning wipes incorporating a blown fiber "scrubbing" or texture layer provide only a minimal thickness or extension relative to the substrate surface, likely giving rise to a less than desirable scrubbiness characteristic. Further, it is preferred that the discrete portions (for example, the portions 20a, 20b) provided by the texture layer 14 of the present disclosure be sufficiently spaced from one another to ensure intimate contact between the mass 32 and the sidewall 42 of the particular texture layer portion 20a, 20b during a cleaning operation. Further still, it is desirable that the texture layer 14 has abrasion resistance such that the composition forming the texture layer 14 remains substantially intact on the substrate 12 during and after the cloth 10 is used to scrub a surface 30. The texture layer 14 of the present disclosure may be configured to have a relative hardness at least equal to or greater than the hardness of the substrate 12 to which the layer is imparted, as briefly referred to above. Stated otherwise, the local hardness of the texture layer portions (e.g., 20a, 20b) or overall texture layer 14 is equal to or greater than the hardness of the entire cloth 10, or the "global hardness". Cloth 10 may thus be defined as having global flexibility, since the substrate 12 is softer or more flexible in relation to the harder, less flexible abrasive/texture layer 14. Hardness of a texture composition 14 after having been formed on a substrate as well as hardness of a substrate (for comparison) can be achieved in a number of ways. For example, hardness of a material can be established by determining the Rockwell indentation hardness, such as described in ASTM E18 - 14a: Standard Test Methods for Rockwell Hardness of Metallic Materials; by determining Knoop and Vickers hardness, such as described in ASTM E384 - 10: Standard Test Method for Knoop and Vickers Hardness of Materials; by determining the durometer hardness, such as described in ASTM D2240 - 05: Standard Test Method for Rubber Property—Durometer Hardness, or by determining the Brinell hardness, such as described in ASTM E10 - 14: Standard Test Method for Brinell Hardness of Metallic Materials. A cloth having the above characteristics is uniquely useful as a scrubbing article in that the cloth is sufficiently flexible to allow a user to make contact in, on and about a variety of objects to be scrubbed, while the hardness of the abrasive layer provides the desired scrubbing performance.

Alternatively, in use, the scrubbing cloth 10 may be positioned such that the non-textured surface (e.g., 16, FIG. 1) is adjacent the surface 30 to be scrubbed. In this manner, a user (not shown) can utilize the softer, less abrasive surface 16 to perform a less abrasive or wiping action to the surface 30. As described, the textured layer 14 may be formed on a flattened, less lofty surface or on a fluffy, loftier or more absorbent surface of a substrate. Where the texture layer 14 is formed on a fluffier, loftier or more absorbent surface (e.g., 16), while portions of the surface 16 may impart a mild wiping action to the surface 30, it remains that the texture layer 14 will nevertheless provide a more abrasive side 16 and a non-abrasive side 18. In this case, the flat, less lofty surface 18 may be utilized to perform a wiping, absorbing or non-abrasive function. Regardless of the surface on which the texture layer 14 is formed, by including a texture layer on at least one of the surfaces 16, 18 and by forming the cloth to have differing, opposed surfaces 16, 18, a multipurpose scrubbing cloth is formed from a single substrate layer (i.e., non-laminated, uniform) and can perform multiple functions depending upon the surface 16, 18 that is applied to a targeted object to be treated.

### Texture Layer Compositions

As discussed above, the texture layer 14 is an abrasive composition that is imparted to substrate 12. The exact composition of the texture layer 14 can vary depending upon desired end performance characteristics. To this end, a texture layer composition is initially formulated and then deposited or formed on the substrate 12. The texture layer 14 of the present disclosure is distinguished from a thin layer of print applied to a surface of a cloth via heat transfer printing. Heat transfer printing of a thin layer of print results in a printed layer that is not ideal for scrubbing or scouring functions as described herein. Compositions of the texture layer 14 according to the disclosure will include a selected resin and may include additional constituents such as mineral(s), filler(s), colorant(s), thickener(s), defoaming agent(s), surfactant(s), soaps, or other cleaning/disinfecting/sanitizing agents etc. The texture layer 14 may optionally be e-beam treatable/treated and may include compositions such as described U.S. Provisional Patent Application Serial No. 62/121,766, entitled "Scrubbing Article and Method of Making Same" filed on February 27, 2015. Alternately, the texture layer 14 may be UV treatable/treated or crosslinked and may include compositions such as described in U.S. Provisional Patent Application Serial No. 62/121,705, entitled, "UV Treated Scrubbing Articles and Methods of Making Same" filed on February 27, 2015.

Various materials are suitable for forming the texture layer 14. As described above, texture layer 14 comprises a resin composition and may comprise various polymers and/or monomers. Some acceptable resins include those resins selected from the group consisting of polyolefins, styrene-butadiene resin, acrylic resin, phenolic resin, nitrile resin, ethylene vinyl acetate resin, polyurethane resin, styrene-acrylic resin, vinyl acrylic resin and combinations thereof. Other non-limiting examples of binder resins useful with the present disclosure include amino resins, alkylated urea-formaldehyde resins, melamine-formaldehyde resins, acrylic resins (including acrylates and methacrylates) such as vinyl acrylates, acrylated epoxies, acrylated urethanes, acrylated polyesters, acrylated acrylics, acrylated polyethers, vinyl ethers, acrylated oils, and acrylated silicones, alkyd resins such as urethane alkyd resins, polyester resins, reactive urethane resins, phenolic resins such as resole and novolac resins, phenolic/latex resins, epoxy resins, and the like. The resins may be provided as monomers, oligomers, polymers, or combination thereof. Monomers may include multifunctional monomers capable of forming a crosslinked structure, such as epoxy monomers, olefins, styrene, butadiene, acrylic monomers, phenolic monomers, substituted phenolic monomers, nitrile monomers, ethylene vinyl acetate monomer, isocyanates, acrylic monomers, vinyl acrylic monomer and combinations thereof. Other non-limiting examples of binder resins useful with the present disclosure include amino acids, alkylated urea monomers, melamines, acrylic monomers (including acrylates and methacrylates) such as vinyl acrylates, acrylated epoxies, acrylated urethanes, acrylated polyesters, acrylated acrylics, acrylated ethers, vinyl ethers, acrylated oils, and acrylated silicones, alkyd monomers such as urethane alkyd monomers, and esters.

Other desirable features of texture layer 14 compositions include compositions having a molecular weight and/or viscosity that allows for the texture layer 14 to have sufficient (e.g., minimum level of) adhesion to the substrate 12 to which it is applied such that it does not readily wipe off of or shift along the substrate surface 16 (i.e., such that the texture layer 14 stays on the substrate surface 16 after transfer of the texture layer 14 to the substrate 16 and prior and/or subsequent to further treatment). Further, the texture layer 14 desirably has a molecular weight resulting in qualities (e.g., hardiness, stability etc.) at room temperature such that, after application to a substrate (e.g., 12) it does not stick to itself or deform readily when contacted, for example if the substrate is wound upon itself to be further processed (e.g., e-beam treated) offline at a location different from the texture forming location. To this end, suitable materials for the texture layer 14 composition may also be selected to have molecular weights and/or viscosities resulting in desired material flow properties. Specifically, materials may be selected to have molecular weights or viscosities allowing the texture layer 14 composition to be flowable in a manner that will fill the holes or voids of stencil pattern during transfer or printing of the composition to a substrate 12, sufficiently adhere to, and perhaps penetrate, the substrate 12 and to hold the desired pattern shape upon removal of the stencil from the substrate 12, even prior to (though especially subsequent to) additional processing such as rest or wait periods, heat treatment (evaporation) or optional e-beam or UV treatment. Regardless, the viscosity of a texture layer 14 composition may be selected to provide a sharp pattern. Lower viscosity mixtures may have a tendency to result in printed (or coated) droplets of mixture that almost immediately coalesce on a substrate and form a continuous film rather than discreet droplets, as often desirable for obtaining a sharp pattern.

In addition, an initiator, a promoter, or a retardant can optionally be provided as part of the formulation or composition of texture layer 14, according to some embodiments of the present disclosure, as described in detail in Provisional Patent Application Serial No. 62/121,766, incorporated by reference herein above.

In some embodiments, the texture layer 14 optionally further includes a particulate additive for enhanced hardness. To this end, the scrubbing article 10 of the present disclosure is useful in a wide variety of potential applications having different scrubbing requirements. For some applications, it is desirable that the scrubbing article 10, and in particular the texture layer 14, be more or less abrasive than others. While the above-described resin component of the texture layer 14 independently imparts a scrubbiness feature to the article 10 greater than other available scrubbing articles, this scrubbiness characteristic can be further enhanced via the addition of a particulate component. With this in mind, a wide variety of minerals or fillers as known in the art can be employed. Useful minerals include A_{l2O3}, "Minex" (available from The Cary Co. of Addison, Illinois), Si_{O2}, Ti_{O2}, etc. Exemplary fillers include CaCo₃, talc, etc. Where employed, the particulate component additive comprises less than 70% by weight of the texture layer 14, more preferably less than 50% by weight, most preferably less than 30% by weight. Further, the particulate component may consist of inorganic, hard, and small particles. For example, the "Minex" mineral particulate component has a median particle size of 2 microns and a Knoop hardness of about 560. Of course, other particle size and hardness values may also be useful. The inorganic nature of the particulate component, in conjunction with the non-ionic resin component, renders the resulting texture layer 14 amenable for use with any type of chemical solution.

The texture layer 14 can further include a colorant or pigment additive to provide a desired aesthetic appeal to the wiping article 10. Appropriate pigments are well known in the art, and include, for example, products sold under the trade name SUNSPERSE, available from Sun Chemical Corp. of Amelia, Ohio. Other coloring agents as known in the art are equally acceptable and in some embodiments comprise less than 10% of the texture layer composition by weight.

Additionally, the texture layer composition can include a thickening agent or agents to achieve a viscosity most desirable for the particular printing technique employed and speed of the manufacturing line. In this regard, appropriate thickening agents are known in the art and include, for example, methylcellulose and a material available under the trade name "RHEOLATE 255" from Rheox, Inc. of Hightstown, New Jersey. Another acceptable thickening agent is available from Huntsman International LLC, High Point, NC, USA under the trade designation of LYOPRINT PT-XN. A thickening agent may be unnecessary depending upon the selected resin and printing technique; however, where employed, the thickening agent preferably comprises less than approximately 40% by weight of the texture layer composition. In other embodiments, a salt component may be provided in the composition to aid in causing an ionic reaction between components of an emulsion and thereby likewise generate an increase in the viscosity of the composition, as is known in the art. Notwithstanding the above, the composition of texture layer 14 may be non-ionic, according to some embodiments.

As indicated above, anti-foaming agents may be included in the composition to provide defoaming or emulsification of the composition. As described in Ullmann's Encyclopedia of Industrial Chemistry (section "Foams and Foam Control"), some anti-foaming materials are carrier oils; such as water-insoluble paraffinic and naphthenic mineral oils, vegetable oils, tall oil, castor oil, soybean oil, peanut oil; silicone oils, such as dimethylpolysiloxanes; hydrophobic silica; Hydrophobic fat derivatives and waxes, such as fatty acid esters of monofunctional and polyfunctional alcohols, fatty acid amides and sulfonamides, paraffinic hydrocarbon waxes, ozokerite, and montan wax, phosphoric acid mono-, di-, and triesters of short- and long-chain fatty alcohols, short- and long-chain natural or synthetic fatty alcohols, water-insoluble soaps of long-chain fatty acids, including aluminum stearate, calcium stearate, and calcium behenate, perfluorinated fatty alcohols; water-insoluble polymers, such as low molecular mass, fatty acid modified alkyd resins, low molecular mass novolaks, copolymers of vinyl acetate and long-chain maleic and fumaric acid diesters, and methyl methacrylate- vinylpyrrolidone copolymers, poly(propyleneglycols) and high molecular mass propylene oxide adducts to glycerol, trimethylol, propane (1,1,1-tris(hydroxymethyl)propane), pentaerythritol, triethanolamine, dipentaerythritol, polyglycerol, addition products of butylene oxide or long-chain a-epoxides with polyvalent alcohols. An example anti-foaming agent is a silicone emulsion commercially available under the trade designation of XIAMETER AFE-1520, manufactured by Dow Corning Corporation of Midland, MI, USA.

In some embodiments, the composition of the texture layer 14 may include binder resins, ceramic microparticles or processing agents as described in U.S. Provisional Patent Application Serial No. 62/121,644 , entitled, "Consumer Scrubbing Article with Ceramic Microparticles and Method of Making Same" filed on February 27, 2015.

Finally, and as previously described, the scrubbing cloth 10 of the present disclosure can be used "dry" or can be loaded with a chemical (solution or solid) for disinfecting, sanitizing or cleaning (e.g., a soap). The term "loaded" is in reference to a chemical solution being absorbed by the substrate 12 prior to being delivered to a user. In addition or alternatively, the chemical may be sprayed onto a surface of the cloth. In still further embodiments, a chemical may be provided in or as part of the texture layer composition 14. Thus, deposited (e.g., printed) texture layer 14 may comprise printed soap scrubbing dots having similar or varying heights (e.g., 20a, 20b, FIG. 3). With these various constructions, during use, the chemical solution is released from the substrate 12 as the user wipes the scrubbing article 10 across a surface. Thus, in embodiments where the chemical is provided as part of the texture layer 14, the texture layer (i.e., scrubbing portions 20a, 20b) may gradually decrease in size as the chemical is consumed during a scrubbing application. Due to the preferred non-ionic nature of the texture layer 14, virtually any desired chemical (solution or solid) can be usedincluding water, soap, quaternary ammonium salt solutions, Lauricidin™-based anti-microbials, alcohol-based anti-microbials, citrus-based cleaners, solvent-based cleaners, cream polishes, anionic cleaners, amine oxides, etc. That is to say, where employed, the chemical solution can be anionic, cationic, or neutral.

Prior to forming a texture layer 14 on a substrate 12, depending upon the type of substrate, the surface (16, 18) of the substrate 12 may be primed. Priming may involve mechanical, chemical, physical and material application methods beyond the fabric treatments described above in relation to formation of a flat, less lofty surface 18. Alternatively, priming may include application of a chemical primer such as an adhesive. Notably, however, for many substrates 12, no primer is necessary prior to transfer of the texture layer 14 composition onto the substrate 12 and achieve adequate adhesion.

The texture layer 14 composition can be formed on the substrate 12 using a variety of known techniques such as printing, (e.g., screen printing, gravure printing, flexographic printing, etc.), coating (e.g., roll, spray, electrostatic), etching, laser etching, injection molding, micro-replication and embossing such as described in U.S. Provisional Patent Applications Serial Nos. 62/121,644 and 62/121, 776.

### EXAMPLES

**TABLE 1: Texture Layer (Printing Abrasive) Materials**

| ITEM | DESCRIPTION |
|---|---|
| Latex | Carboxylated styrene-butadiene emulsion with a Brookfield viscosity of 200 cps (#2/20 rpm) and pH of 9.0, commercially available under the trade designation ROVENE 5900 from MALLARD CREEK POLYMERS, INC., Charlotte, NC, USA. |
| Pigment | Liquid white pigment with a density of 1.984 g/cc, commercially available under the trade designation of WHD9507 SUNSPERSE WHITE 6, from SUN CHEMICAL CORPORATION, Cincinnati, OH, USA |
| Thickener | Fully neutralized, anionic acrylic polymer dispersion with a specific gravity of 1.1, commercially available under the trade designation of LYOPRINT PT-XN from HUNTSMAN INTERNATIONAL LLC, High Point, North Carolina, USA |
| Silicone Emulsion | Silicone emulsion with a specific gravity of 1.0 and with a pH of 3.5, commercially available under the trade designation of XIAMETER AFE-1520, from DOW CORNING CORPORATION, Midland, MI, USA. |

### Preparation of Texture Layer Compositions for Samples 1 and 2

All ingredients from TABLE 1 were weighed out to the nearest 0.1 grams in separate plastic containers in desired quantities. A mixture was prepared by placing all ingredients in a rigid plastic container. A plastic lid was secured on the container before starting the mixing. The mixture was mixed for 30 seconds in a laboratory centrifugal mixer commercially available from Flaktek, Inc., Landrum, SC, USA under the trade designation of SPEEDMIXER DAC 400.1 VAC-P. After 30 seconds, the mixer was stopped, and the plastic container which had the mixture in it was removed the mixer. The container was left undisturbed on a laboratory bench for 24 hours. The composition of the resultant texture layer (printing abrasive) mixture is presented in TABLE 2.

**TABLE 2: Composition of the Prepared Mixture for Samples 1 and 2**

| **Component** | **Composition (grams)** |
|---|---|
| Latex | 95 |
| Pigment | 3 |
| Silicon Emulsion | 0.2 |
| Thickener | 1.8 |
| TOTAL | 100 |

**TABLE 3: Substrate Materials**

| Sample | Material |
|---|---|
| SAMPLE 1 | Cloth having a loftier side and an opposed, less lofty side. The average height of the fibers on the loftier side was determined to be approximately 2000 microns and the average height of the fibers on the less lofty side was determined to be 200 microns, when measured with the help of an optical microscope, from the plane at the end of the fibers from which the fibers protrude |
| SAMPLE 2 | A woven microfiber cloth made of polyester and polyamide fibers with a basis weight of approximately 280 gsm, commercially available from 3M COMPANY, St. Paul, MN, USA under the trade designation of SCOTCH-BRITE 3-IN-1 MICROFIBER CLOTH and under the catalog number of 9070. |

### Preparation of the Substrate Materials

The SAMPLE 2 substrate was treated via consolidating one side via heated steel rolls with a nip. The steel rolls were heated, starting at room temperature and increased to greater than 204°C. It was observed that the roll speed has an impact on the heat dwell time, which can impact the amount of the consolidation present on the cloth. One of the rolls was heated to a higher temperature than the other, providing consolidation on one side while the opposed side remained undisturbed. It was likewise observed that the lower temperature roll would not necessarily need to be heated. A gap was also set between the rolls in order to not compress SAMPLE 2 completely flat. The initial thickness of the substrate was 3.2 mm prior to consolidating one surface. After consolidating, an approximate thickness of the same cloth was found to be 2.0mm.

For each of SAMPLES 1 and 2 a rectangular cloth specimen with approximate dimensions of 30 cm x 20 cm was secured on a flat laboratory bench by applying adhesive tape on its edges for subsequent printing of the prepared composition (described in TABLE 2) thereon.

### Printing the Prepared Compositions onto the Prepared Substrates

For each of the prepared SAMPLES, a metal stencil was placed on top of the substrate specimen. For SAMPLE 1, the metal stencil included the texture pattern shown in FIG. 1, for SAMPLE 2, the metal stencil included the texture pattern shown in FIG. 9B. Approximately 100 grams of the prepared printing composition was placed on the stencil with the help of a wooden applicator. The printing mixture was then applied on the printing pattern of the stencil with a shearing motion while applying hand pressure downwards and with the help of a hand-held squeegee. It was observed that for each specimen, the printing mixture filled the holes of the printing pattern and was transferred onto the substrate specimen. Then, the stencil was removed and the printed substrate specimen was left undisturbed on a laboratory bench for 10 minutes. After 10 minutes, the printed specimen was placed in a laboratory hot air circulating oven (Model VRC2-35-1E, commercially available from Despatch Industries, Minneapolis, MN, USA) for 3 minutes. The temperature of the oven was set to 149°C. After 3 minutes, the printed specimen was taken out of the oven and left was left undisturbed on a laboratory bench for 24 hours.

### RESULTS

### SAMPLE 1:

FIGS. 6A and 6B are photographs of SAMPLE 1 prior to printing the prepared composition (FIG. 6A) and subsequent to printing the composition to a surface (FIG. 6B). As indicated in FIG. 6A, a first surface 16 of the substrate 12 comprises a relatively more fluffy, lofty, less dense surface having fibers 50 and an opposed surface 18 is comprises a relatively flatter, less lofty, more dense surface. FIG. 6B depicts the textured surface 14 after printing thereof to the flatter surface 18.

FIGS. 7A and 7B are photographs of SAMPLE 2 after printing of the prepared composition 14 to a surface of the substrate 12. As can be seen in FIG. 7B, an approximately 3 cm wide section of the substrate was left blank (not printed). It was observed during formation of the example substrate 12 shown in FIGS. 7A-7B, that treating one side to form a flattened surface 18 resulted in a surface 18 having portions 28 that may rebound or revert close to their original form (such as the form of untreated surface 16) if not pressed or consolidated into a film-like surface, and the resultant cloth 10 is conformable and feels soft.

Scrubbing cloths according to the present disclosure may uniquely satisfy various cleaning or scrubbing requirements in a singular cleaning article. In this manner, scrubbing cloths according to the disclosure may be considered multipurpose scrubbing cloths.

## Claims

1. A scrubbing cloth comprising:
a substrate (12) having a first surface (16) and a second surface (18) opposite the first surface;
wherein the first surface has a first degree of loftiness and the second surface has a second degree of loftiness; and
wherein the first degree of loftiness is greater than the second degree of loftiness;
and
wherein at least one of the first and second surfaces include a texture layer (14) formed thereon; **characterized in that** the substrate consists essentially of a single layer of woven or knitted material.

2. The scrubbing cloth of claim 1, wherein the first surface has a first height and a first density and the second surface has a second height and a second density and wherein the first height is greater than the second height and the second density is greater than the first density.

3. The scrubbing cloth of claim 1, wherein the second surface comprises a consolidated surface.

4. The scrubbing cloth of claim 1, wherein the texture layer defines a pattern.

5. The scrubbing cloth of claim 4, wherein the pattern includes a plurality of discrete segments.

6. The scrubbing cloth of claim 1, wherein the texture layer includes a multiplicity of ceramic microparticles.

7. The scrubbing cloth of claim 1, wherein the texture layer includes a plurality of randomly distributed texturings.

8. The scrubbing cloth of claim 1, wherein the texture layer comprises one of an e-beam or UV treated texture layer.

9. The scrubbing cloth of claim 1, further wherein at least one of the texture layer and substrate comprise a chemical solution for cleaning.

10. The scrubbing cloth of claim 1, wherein the texture layer comprises a hardness that is equal or greater than a hardness of the substrate.

11. A scrubbing cloth comprising:
a substrate (12) having first (16) and second (18) surface opposed surfaces;
wherein at least one of the first and second surfaces is more absorptive than the other; and
wherein at least one of the first and second surfaces include a texture layer (14) formed thereon and the texture layer includes a plurality of discrete segments;
**characterized in that** the substrate consists essentially of a single layer of woven or knitted material.

12. A method of manufacturing a scrubbing cloth having a textured surface, the method comprising:
providing a single-layer of woven or knitted cloth having a first surface and a second surface opposite the first surface;
treating the second surface of the cloth to include at least one of an absorption, density, loftiness or height greater than the opposed first surface;
allowing the first surface of the cloth to remain undisturbed during the treating step; and
forming a texture layer on at least one of the first and second surfaces.

13. The method of claim 12, wherein the texture layer comprises at least one of a soap solution and a multiplicity of ceramic microparticles.

## Patentansprüche

1. Scheuertuch, Folgendes aufweisend:
ein Substrat (12), das eine erste Oberfläche (16) und eine zweite Oberfläche (18) gegenüber der ersten Oberfläche aufweist; wobei die erste Oberfläche einen ersten Grad der Bauschigkeit hat und die zweite Oberfläche einen zweiten Grad der Bauschigkeit hat; und
wobei der erste Grad der Bauschigkeit größer als der zweite Grad der Bauschigkeit ist;
und
wobei mindestens eine der ersten und zweiten Oberflächen eine darauf gebildete Texturschicht (14) aufweist; **dadurch gekennzeichnet, dass** das Substrat im Wesentlichen aus einer einzigen Schicht von gewebtem oder gestricktem Material besteht.

2. Scheuertuch nach Anspruch 1, wobei die erste Oberfläche eine erste Höhe und eine erste Dichte aufweist und die zweite Oberfläche eine zweite Höhe und eine zweite Dichte aufweist und wobei die erste Höhe größer als die zweite Höhe ist und die zweite Dichte größer als die erste Dichte ist.

3. Scheuertuch nach Anspruch 1, wobei die zweite Oberfläche eine konsolidierte Oberfläche aufweist.

4. Scheuertuch nach Anspruch 1, wobei die Texturschicht ein Muster definiert.

5. Scheuertuch nach Anspruch 4, wobei das Muster mehrere einzelne Segmente aufweist.

6. Scheuertuch nach Anspruch 1, wobei die Texturschicht mehrere Keramik-Mikroteilchen aufweist.

7. Scheuertuch nach Anspruch 1, wobei die Texturschicht mehrere zufällig verteilte Texturierungen aufweist.

8. Scheuertuch nach Anspruch 1, wobei die Texturschicht eine Elektronenstrahl- oder UV-behandelte Texturschicht aufweist.

9. Scheuertuch nach Anspruch 1, wobei die Texturschicht und/oder das Substrat ferner eine chemische Reinigungslösung aufweist.

10. Scheuertuch nach Anspruch 1, wobei die Texturschicht eine Härte aufweist, die der Härte des Substrats entspricht oder höher als diese ist.

11. Scheuertuch, aufweisend:
ein Substrat (12), das eine erste (16) und eine zweite (18) Oberfläche hat, die einander gegenüber liegen;
wobei mindestens eine der ersten und zweiten Oberflächen ein höheres Absorptionsvermögen als die andere aufweist, und wobei mindestens eine der ersten und zweiten Oberflächen eine darauf gebildete Texturschicht (14) aufweist und die Texturschicht eine Mehrzahl von einzelnen Segmenten aufweist;
**dadurch gekennzeichnet, dass** das Substrat im Wesentlichen aus einer einzigen Schicht von gewebtem oder gestricktem Material besteht.

12. Verfahren zur Herstellung eines Scheuertuchs mit einer texturierten Oberfläche, wobei das Verfahren aufweist:
Bereitstellen einer Einzelschicht eines gewebten oder gestrickten Stoffs, die eine erste Oberfläche und eine zweite Oberfläche gegenüber der ersten Oberfläche hat;
Behandeln der zweiten Oberfläche des Stoffs, um eine größere Absorption, Dichte, Bauschigkeit und/oder Höhe als die gegenüberliegende erste Oberfläche aufzuweisen;
wobei die erste Oberfläche des Stoffes während des Behandlungsschritts ungestört bleiben kann; und
Bilden einer Texturschicht auf mindestens einer der ersten und zweiten Oberflächen.

13. Verfahren nach Anspruch 12, wobei die Texturschicht eine Seifenlösung und/oder mehrere Keramik-Mikroteilchen aufweist.

## Revendications

1. Tissu de récurage comprenant :
un substrat (12) comportant une première surface (16) et une deuxième surface (18) opposée à la première surface ; dans lequel la première surface présente un premier degré de relief et la deuxième surface présente un deuxième degré de relief ; et
dans lequel le premier degré de relief est supérieur au deuxième degré de relief ;
et
dans lequel au moins une surface parmi la première et la deuxième surface inclut une couche de texture (14) formée sur celle-ci ; **caractérisé en ce que** le substrat est constitué pratiquement d'une couche unique de matériau tissé ou tricoté.

2. Tissu de récurage selon la revendication 1, dans lequel la première surface présente une première hauteur et une première densité et la deuxième surface présente une deuxième hauteur et une deuxième densité et dans lequel la première hauteur est supérieure à la deuxième hauteur et la deuxième densité est supérieure à la première densité.

3. Tissu de récurage selon la revendication 1, dans lequel la deuxième surface comprend une surface consolidée.

4. Tissu de récurage selon la revendication 1, dans lequel la couche de texture définit un motif.

5. Tissu de récurage selon la revendication 4, dans lequel le motif inclut une pluralité de segments distincts.

6. Tissu de récurage selon la revendication 1, dans lequel la couche de texture inclut une multiplicité de microparticules de céramique.

7. Tissu de récurage selon la revendication 1, dans lequel la couche de texture inclut une pluralité de textures réparties de façon aléatoire.

8. Tissu de récurage selon la revendication 1, dans lequel la couche de texture comprend une couche parmi une couche de texture traitée par faisceau d'électrons ou par UV.

9. Tissu de récurage selon la revendication 1, dans lequel en outre au moins un élément parmi la couche de texture et le substrat comprend une solution chimique de nettoyage.

10. Tissu de récurage selon la revendication 1, dans lequel la couche de texture comprend une dureté qui est égale ou supérieure à une dureté du substrat.

11. Tissu de récurage comprenant :
un substrat (12) comportant des première (16) et deuxième (18) surfaces opposées ;
dans lequel au moins une surface parmi la première et la deuxième surface est plus absorbante que l'autre ; et dans lequel au moins une surface parmi la première et la deuxième surface inclut une couche de texture (14) formée sur celle-ci et la couche de texture inclut une pluralité de segments distincts ;
**caractérisé en ce que** le substrat est constitué pratiquement d'une couche unique de matériau tissé ou tricoté.

12. Procédé de fabrication d'un tissu de récurage comportant une surface texturée, le procédé comprenant les étapes consistant à :
fournir une couche unique de tissu tissé ou tricoté ayant une première surface et une deuxième surface opposée à la première surface ;
traiter la deuxième surface du tissu pour inclure au moins une propriété parmi l'absorption, la masse volumique, le degré de relief ou la hauteur, supérieure à la première surface opposée ;
permettre à la première surface du tissu de rester intacte pendant l'étape de traitement ; et
former une couche de texture sur au moins une parmi les première et deuxième surfaces.

13. Procédé selon la revendication 12, dans lequel la couche de texture comprend au moins l'une parmi une solution de savon et une multiplicité de microparticules de céramique.
